(19) **Europäisches Patentamt / European Patent Office / Office européen des brevets**

(11) **EP 2 282 284 A2**

(12) # EUROPEAN PATENT APPLICATION

(43) Date of publication:
**09.02.2011 Bulletin 2011/06**

(51) Int Cl.:
**G06K 9/00** (2006.01) **G07C 9/00** (2006.01)
**H04L 9/00** (2006.01)

(21) Application number: **10007727.0**

(22) Date of filing: **26.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.07.2009 EP 09009875**

(71) Applicant: **Universität Duisburg-Essen**
**45141 Essen (DE)**

(72) Inventors:
• **Vinck, Han**
**5913-RP Venlo (NL)**
• **Balakirskiy, Vladimir**
**45326 Essen (DE)**

(74) Representative: **Gesthuysen, von Rohr & Eggert**
**Patentanwälte**
**Huyssenallee 100**
**45128 Essen (DE)**

(54) **Encoding of biometric information**

(57)    A system and method for encoding a binary original vector and for verifying whether a binary test vector is considered as being the original vector are proposed. The verification is based on the probability that the test vector is the original vector even if it contains some errors.

FIG. 3

**Description**

The present invention relates to a system and method for encoding a preferably digital or binary original vector and for verifying whether a preferably digital or binary test vector is considered as being the original vector even if the test vector is not identical with the original vector, e.g. due to detection or transmission errors or errors resulting from noise or the like. More particularly, the present invention relates to the processing of biometric data and/or to the verification or authentication of digital or binary information or users.

When digital, in particular binary, information, such as biometric information, is detected and/or transmitted, usually errors occur. Therefore, it is difficult to decide whether the information, such as biometric information relating to a finger print or the like, of a claimed user can be admitted as original or correct information belonging to an admitted user. Thus, verification of information and authentication of users are difficult.

Similar problems may occur if a large document or the like is scanned and/or a digital document is transmitted. Due to errors, it may be difficult to decide whether the document shall be admitted as an original document.

The present invention relates generally to preferably digital or binary information with multiple values, bytes or bits, i.e. to information in the form of a vector. In particular, the vector is or corresponds to biometric information or data of a user. However, the vector may relate or correspond according to a preferred alternative to any other digital or binary information with multiple data, values, bytes or bits, such as a large document or the like.

Object of the present invention is to provide a system and method for encoding a preferably digital or binary original vector and for verifying whether a preferably digital or binary test vector is considered as being the original vector even if the test vector is not identical with the original vector, e.g. due to detection or transmission errors or errors resulting from noise or the like, wherein the data storage and/or processing can be simplified and/or a high data compression can be achieved.

The above object is achieved by a system according to claim 1 or by a method according to claim 7. Preferred embodiments are subject of the subclaims.

According to a main aspect of the present invention, a test vector is verified by indicating or outputting that the test vector is accepted as being the original vector if the acceptance probability (probability that test values relating to the test vector are specific values of an original vector with some errors) is higher than or equal to a threshold or rejection probability or a function thereof. This simplifies data processing and/or allows a fault-tolerant verification of vectors and/or a fault-tolerant authentication of related users. Thus, the present invention is in particular useful for constructing passwords for noisy observations or in noisy environments.

Preferably, it is provided:

a first splitter module to split up the original vector in multiple fragments,

a first generator module to generate a specific value for each fragment of the original vector based on a function,

a second splitter module to split up the test vector in multiple fragments,

a second generator module to generate a test value for each fragment of the test vector based on the function,

a determination module to determine an acceptance probability that the test values are the specific values in particular with errors, and

a verifier module to verify the test vector by indicating or outputting that the test vector is accepted as being the original vector if the acceptance probability is higher than or equal to: a) a threshold; and/or b) a rejection probability, that the test values relate to a random vector, or a function of the rejection probability.

Preferably, the first and second splitter module of the system are formed by the same module. This allows a simple construction.

Preferably, the first and second generator module are formed by the same module. This allows a simple construction.

Preferably, the determination module is adapted to determine the rejection probability as well. This allows a simple construction.

The modules of the system may be formed by separate units or devices or hardware. Alternative or additionally, the modules may be formed or realized by software. The different modules of functions may be realized in one hardware device, computer or software and/or distributed over different locations, devices, programs or the like.

The splitting up of the vector in multiple fragments and the generation of a value for each fragment allows high data compression. In particular, the values are scalars.

Preferably, only the specific values for each fragment of the original vector are stored. In particular, the original vector is not stored. This minimizes the required storage and/or allows high security,

Preferably, the function determines or is the weight of the fragments, in particular the Hamming weight. This allows a very simple and fast generation of the values.

Preferably, the function is chosen such that reconstruction of the original vector is not possible. If the original vector is not stored, this allows high security.

Further features, advantages, aspects and characteristics of the present invention will be apparent from the claims and the following description of a preferred embodiment with reference to the drawings. It shows:

Fig. 1    a first block diagram of a system and method according to the present invention;

Fig. 2    a second block diagram of the system and method; and

Fig. 3    a third block diagram of the system and method.

In the following, a preferred system and method according to the present invention are explained.

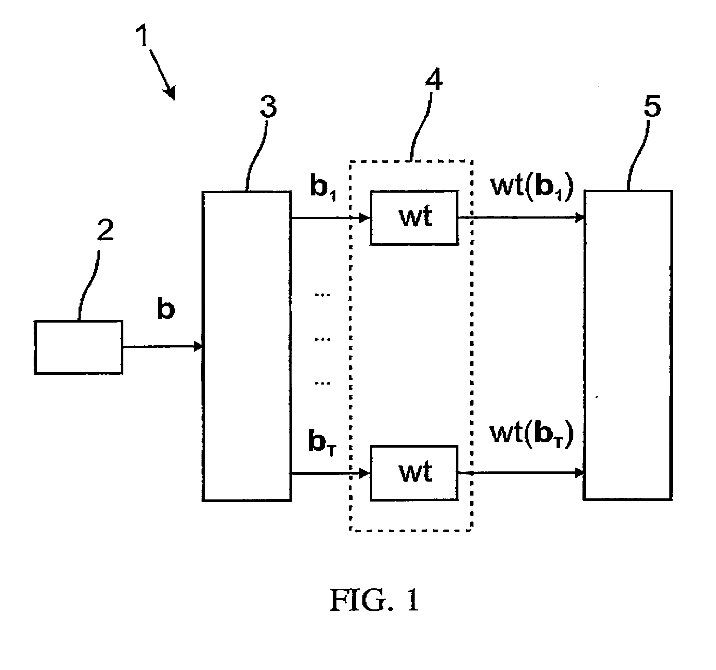

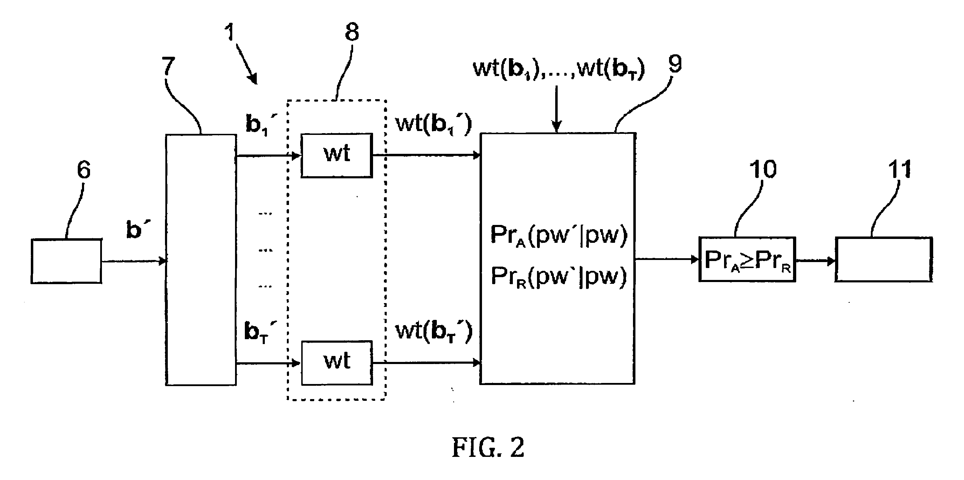

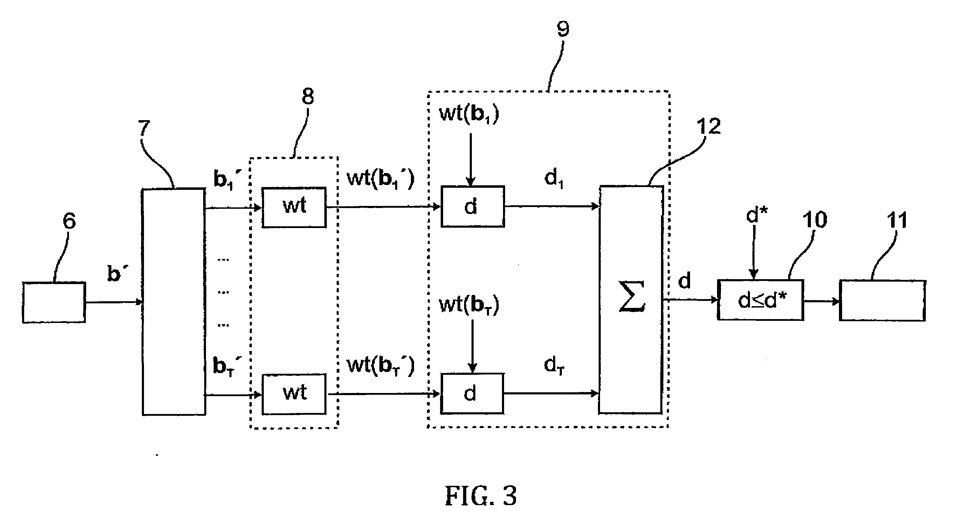

Fig. 1 shows schematically first part of the preferred system and method. Fig. 2 shows schematically a second part of the preferred system and method. Fig. 3 shows a preferred realization of the second part of the system and method.

The proposed system 1 and the proposed method according to the present invention are adapted for encoding a preferably digital or binary original vector b and for verifying whether a preferably digital or binary test vector b' is considered as being the original vector b even if the test vector b' is not identical with the original vector b, e.g. due to detection or transmission errors, noise or the like.

The original vector b originates from a source or input module 2 which may form part of the system 1. Preferably, the original vector b is or corresponds to biometric information, such as at least part of a finger or hand print, an eye scan or the like.

Preferably, the system 1 comprises a first splitter module 3 to split up the original vector b in multiple fragments $b_I...b_T$, i.e. in T fragments $b_t$ (t = 1...T).

Preferably, each fragments $b_t$ has the same length of n bits.

Preferably, the system 1 comprises a cutting module or function in order to cut the vector b to a desired or appropriate or predetermined length, in particular to a multiple of n bits, before splitting up. This cutting module or function is preferably realized or formed by or in the splitter module 3.

The system 1 comprises preferably a first generator module 4 to generate a specific value $wt(b_t)$ for each fragment $b_t$ based on a predetermined or specific function wt. Preferably, the identical function wt is used for each fragment $b_t$. However, different functions could also be used.

Preferably, the function wt is chosen such that the original values $wt(b_t)$ do not allow reconstruction of the original vector b.

Preferably, the function wt is the weight, in particular the Hamming weight.

Preferably, the original values $wt(b_t)$ are scalars, in particular integers.

In the preferred embodiment, the vector b is compressed by the factor n to the T original values $wt(b_t)$.

In particular, the specific values $wt(b_t)$ form a compressed information or password of the original vector b or of an associated user. In particular, the vector b forms or corresponds to biometric information of the user, and the password of the user is formed by the specific values $wt(b_t)$ as described above.

Preferably, the specific values $wt(b_t)$ / the compressed information / the password are stored, in particular in a data base, storage module 5 or the like. The storage module 5 may form part of system 1. However, it may be formed by any external storage medium or the like.

In particular, the password is stored together with the name or any other identification of the associated user.

It has to be added that the original vector b, in particular the original biometric information, relating to the associated user, in particular to an initial or admitted user, does not have to be stored. Preferably, this information shall not be stored. Thus, a high security can be achieved. In this regard, it has to be pointed out that the original biometric information or vector b can not be reconstructed from the specific values wt.

Above, the preferred generation of compressed information or of the password has been described. This generation may be realized independently from or before the following processing.

A test vector b' which preferably is or corresponds to biometric data of a claimed user, is inputted or collected from an optional input module 6 or the like as shown in Fig. 2. The input module 6 may form part of the system 1 or may be separate therefrom.

The input module 6 and the input module 2 may be formed by the same module.

The input module 2 / 6 may be formed by a scanner system or any other detection device for collecting, processing, transmitting and/or storing biometric information or the like as vector b / b', i.e. as input information for the system 1 and method according to the present invention.

The test vector b' is split up into multiple fragments $b'_t$, in particular in the same manner as the original vector b. This is done preferably by a second splitter module 7 of the system 1.

Preferably, the second splitter module 7 forms or includes a cutting module or function for cutting the test vector b' to a predetermined or desired length, in particular in the similar manner as the original vector b is cut.

The first splitter module 3 and the second splitter module 7 may be formed by the same module of the system 1.

It has to be noted that the cutter modules or functions for cutting the vectors b and b' may be formed by modules separate from the splitter modules 3 and 7 and/or by a common module.

Test values $wt(b'_t)$ of the fragments $b'_t$ of the test vector b' are generated based on the function used for generating the specific values $wt(b_t)$, i.e, in the same manner as the specific values $wt(b_t)$. Preferably, the test values $wt(b'_t)$ are generated by a second generator module 8 of the system 1.

Preferably, the first generator module 4 and the second generator module 8 are formed by the same module.

In a further step, an acceptance probability $Pr_A$ that the test values $wt(b'_t)$ are the specific values $wt(b_t)$ in particular with errors is determined. There exist different possibilities to determines, calculate or estimate this probability. One example will be explained later in detail.

Preferably, the acceptance probability $Pr_A$ is determined by a determination module 9 of the system 1.

Preferably, a rejection probability $Pr_R$ that the test values relate to a random vector is also determined. Preferably, the rejection probability $Pr_R$ is determined by the determination module 9 as well. However, this rejection probability $Pr_R$ can also be determined by a separate module or can be formed by a threshold or the like.

Preferably, the probabilities Pr are determined based on the test values $wt(b'_t)$ and the specific values $wt(b_t)$. For this purpose, the specific values $wt(b_t)$ can be read or loaded from the storage module 5. Preferably, the acceptance probability $Pr_A$ is compared with the rejection probability $Pr_R$ or with a function thereof or with a value depending therefrom.

If the acceptance probability $Pr_A$ is higher than or equal to the rejection probability $Pr_R$ or a corresponding value, the test vector b' is assumed or accepted as being the original vector b. With other words, the test password of a claimed user formed by the test values $wt(b'_t)$ is compared with the original password of an admitted user formed by the specific values $wt(b_t)$. The decision as to whether the test password is accepted as original password even if or when the passwords are not identical, is based on the probability that the test password is the original password modified by some (acceptable) errors. Thus, the test vector b' is verified by indicating or outputting that the test vector b' is accepted as being the original vector b if the acceptance probability $Pr_A$ is higher than or equal to either a threshold or the rejection probability $Pr_R$ or a function thereof or a value depending therefrom. The test vector b' is preferably verified by a verifier module 10 of the system 1. The result of the verification is preferably indicated or outputted or displaced by an indicator module 11 of the system 1.

Preferably, the test vector b' belongs to a claimed user, In this case, the claimed user is authenticated as an admitted user if the test vector b' is verified or accepted as being the original vector b even if the test vector b' is potentially different from the original vector b due to some errors, in particular errors resulting from the detection, such as scanning of a finger print, and/or transmission, noise or the like.

Therefore, the system 1 can directly indicate, output or display whether a claimed user relating to the test vector b' is authenticated / accepted or not or whether the test vector b' is verified as a known original vector b or not.

Different influences (e.g. scanning uncertainties, noise, transmission errors or the like) may result in errors that amend the test vector b' such that the test vector b' is different from the original vector b even if the test vector b' should be identical and/or belongs to the same user as the original vector b. Depending on the different influences, different types of errors may occur. For example, random errors may occur such that a bit is inversed (i.e. is a "0" instead of a "1" or vice versa) with a probability p. Further, other specific errors may occur, such as bundle errors during transmission or the like.

The kind of error may be determined e.g. in case of biometric data in that the biometric data are detected multiple times and the different resulting vectors are compared. Alternatively or additionally, this repetition allows determination of the error rate or error probability, in particular of the probability p of a random error,

In the following, an example is described how to determine the acceptance / rejection probability Pr for a random error with the probability p. Studies have shown that in this case the determination and verification can be simplified or approximated as shown in Fig. 3 and as explained in the following.

The determination module 9 determines terms $d_t$ for the specific and test values $wt(b_t)$ and $wt(b'_t)$ over all fragments $b_t$ and $b'_t$ according to equation (1):

$$(1) \quad d_t = \frac{(\text{wt}(b_t') - (n - \text{wt}(b_t))p - \text{wt}(b_t)(1-p))^2}{2np(1-p)} - \frac{(\text{wt}(b_t') - n/2)^2}{n/2}, \quad t = 1, \ldots, T$$

The terms $d_t$ are summed up, preferably by a submodule 12 of the determination module 9 of the system 1 as shown in Fig. 3, and the sum is preferably normalized, i.e. divided by the number T of fragments, according to equation (2):

$$(2) \quad d = \frac{d_1 + \ldots + d_T}{T}$$

The resulting value d is compared with a threshold and/or the rejection probability $Pr_R$ which in the present example is formed by term d* which is defined preferably according to equation (3):

$$(3) \quad d^* = \ln \frac{1}{2\sqrt{p(1-p)}}$$

The comparison or verification or decision is preferably performed in the verifier module 10. In the preferred example, vector b' is accepted or verified if $d \le d^*$ and is rejected or not verified if $d > d^*$.

A particular example with p=1/128, n=519 and T=5 subblocks. Hence, vectors b and/or b' can comprise, preferably at least, n*T=2595 elements. Using a weight, preferably the Hamming or "Levenshtein weight or the like, corresponding to the subblocks six specific values $\text{wt}(b_t)$ as a original password of an admitted user and six test values $\text{wt}(b_t')$ as a test password are generated and/or known. The passwords, preferably wt(b) and wt(b'), may look like as follows:

| t | 1 | 2 | 3 | 4 | 5 |
|---|---|---|---|---|---|
| $\text{wt}(b_t)$ | 332 | 16 | 4 | 126 | 313 |
| $\text{wt}(b_t')$ | 352 | 16 | 5 | 140 | 371 |
| $d_t$ | 22.5 | -226.7 | -248.5 | -37.4 | 382.3 |

Values for each $d_t$ can be estimated using formula (1). Terms d and d* can be derived using formulas (2) and (3) to be d=-21.5 and d*=1.7, wherein, preferably, d acts as an acceptance probability $Pr_A$ and d* acts as a rejectance probability $Pr_R$. As d is smaller than d*, b' can be accepted by the inventive system and/or method in this example.

The formulas (1) to (3) may base on the maximum likelihood approach and/or some simplifications. It is explicitly mentioned that it is possible to use other approaches for decision, e.g. least squares method or the like, other simplifications, and/or other approaches for estimating a reasonable threshold, acceptance probability, rejection probability or the like. Different formulas may apply then.

The result is preferably indicated, outputted and/or displayed by indicator module 11 or in any other suitable manner.

The proposed encoding and authentication algorithm allows a compression factor of n / (log (n+1)), if passwords are composed by weights, in particular Hamming weights, of sub blocks with n, preferably binary, elements.

Further, the false acceptance / rejection rate, i.e. the rate of false decisions or verifications, is relative low. For example, if p = 1 / 128 and vectors b consisting of 5j subblocks of length n are processed, the probability of error is only about $10^{-j}$, Therefore, one can attain an arbitrary small probability of error and simultaneously an arbitrary large compression factor provided that parameter n is not very small and that the error approximation is sufficient, in particular when Gaussian approximation for the binominal distribution is used or appropriate.

Based hereon, in the following numerical examples A) with a designated error rate and B) with a designated size of vector b and/or b' are given.

A) A probability of error i.e. the false acceptance / rejection rate for instance should be 0.0001 or less. Thus, $10^{-j}=0.0001$ can be solved leading to j=4. As T=5j subblocks are needed, this leads to T=20 subblocks. Further, it has already been mentioned that, for the reason of approximations to be proper valid, n should not to be very small, in particular with respect to Gaussian approximation is used or appropriate for binomial distribution. It is well known in the art, that this can be expected for $np(1-p)\geq9$. Regarding this matter, reference is made to "Basiswissen Statistik", Karl Bosch, Oldenbourg Wissenschaftsverlag, 2007. Therefore, n can be estimated to be $n\geq9/(p(1-p))=1161,07$. As n may be an integer, n can be 1162 or greater. Thus, the length of the vector b needed for an error probability of 0.0001 is n*T=23240.

B) According to a second example, vector b has a given length of n*T=250000. This length may be defined by a corresponding system, e.g. by a given data matrix of 500x500 elements casted to a vector b or b' or the like, A possible number of fragments can be derived by dividing the length of b by n as already approximated to be 1162 or greater in the present case. Here, 250000/1162=215,146299 subblocks can be used. As the number of subblocks T is preferably is an integer, T is set to 215 and 215*1162=249830 vector elements may be casted into subblocks. Thus, remaining 170 vector elements can be cut away and/or only the first 249830 may be used in the following. The number of subblocks T is 215=5j, which leads to j=43 and to an probability of error i.e. a false acceptance / rejection rate of $10^{-43}$,

The examples given can demonstrate advantages achieved by the present invention using some simple calculations only. It should be mentioned that the examples or formulas (1) to (3) may comprise simplifications in order to give easy formulas instead of single, numerical examples only. For proper validity of these simplifications, n should be not very small, such that Gaussian approximation for the binominal distribution should be valid. Neither this limitation for n nor further assumptions that may be used for demonstration purposes need to apply to the invention itself. For system design, typically a numerical simulation and/or optimization will be used. Thus, limitations regarding n or T do not need to apply. It furthermore may be assumed in the examples given, that p is independent for each vector element. A probability of dependencies e.g. a bundle error probability or the like may be considered alternatively or additionally and the invention is not meant to be limited to any type of error. Nevertheless it is emphasized that the present invention can be applied to any type of error and does not depend on a distribution of the vectors. Knowledge of such a distribution is not realistic in many cases. Thus, no assumption regarding a distribution has been introduced in this invention.

The following table shows some exemplarily values. The vector element related error proability p is preferably assumed to be independent for each element of vectors b and/or b' comprising T subblocks of a length n. Here, length n is estimated by simulation and/or more complex calculations and therefore n may be different to n estimated by formula $np(1-p)\geq9$. The probability of a false accepance/rejectance error can be calculated to be $10^{-j}$.

| l/p | 128 | 64 | 32 | 16 | 8 |
|---|---|---|---|---|---|
| T/j | 5 | 7 | 10 | 19 | 56 |
| n | 519 | 203 | 57 | 5 | 5 |
| n*T | 2595 | 1421 | 570 | 95 | 280 |
| $10^{-j}$ | $10^{-5}$ | $10^{-7}$ | $10^{-10}$ | $10^{-19}$ | $10^{-56}$ |

In the first column with p=1/128 the above given example is continued. The probability of a false acceptance/ rejectance error is $10^{-5}$, which means that the result of acceptance in the above given example may be wrong with a probability of $10^{-5}$.

The examples given are based on binary vectors b, b', as the binary domain is assumed to be most relevant. However, other, preferably digital, domains can be used either. For example, the invention can easily be used with vectors comprising decimal, alphanumeric, or character elements e.g. strings or the like, as weight functions are applicable in non-binary systems as well.

Examples for weight functions are the Hamming weight as well as to the Levenshtein weight, the Damerau-Levenshtein weight or the like, which are weights known in the art for centuries (cf. van Leeuwen, "Handbook of Theoretical Computer Science, Volume A", Elsevier, 1990). Weight functions and distance functions sometimes are used synonymously in the literature, i.e. the terms "Hamming distance" can be used synonymously to "Hamming weight" and/or "Levenshtein distance" can be used synonymously to "Levenshtein weight". In particular, the weight and/or distance is estimated in relation to an origin, a zero vector or the like. Even a vector comprising one or more strings can be divided into T subblocks and corresponding weights can be estimated.

Weights corresponding to the subblocks can be used as a password. A password typically is private as generic for a password. It should be known by a verification system and/or by the password owner only. A password can be a secret key, internal reference and/or test data, a PIN or the like, wherein, in particular, the password allows for verification,

The proposed system 1 and method allow a simple and sufficient authentication of a user. Further, it can be used for other verifying purposes, such as comparison of large documents or the like.

**Claims**

1. System (1) for encoding a preferably digital or binary original vector and for verifying whether a preferably digital or binary test vector is considered as being the original vector even if the test vector is not identical with the original vector e.g. due to detection or transmission errors, the system comprising:

   a first splitter module (3) to split up the original vector in multiple fragments,
   a first generator module (4) to generate a specific value for each fragment of the original vector based on a function,
   a second splitter module (7) to split up the test vector in multiple fragments,
   a second generator module (8) to generate a test value for each fragment of the test vector based on the function,
   a determination module (9) to determine an acceptance probability that the test values are the specific values in particular with errors, and
   a verifier module (10) to verify the test vector by indicating or outputting that the test vector is accepted as being the original vector if the acceptance probability is higher than or equal to: a) a threshold; and/or b) a rejection probability, that the test values relate to a random vector, or a function of the rejection probability.

2. System according to claim 1, **characterized in that** the first and second splitter modules (3; 7) are formed by the same module, and/or that the first and second generator modules (4; 8) are formed by the same module.

3. System according to claim 1 or 2, **characterized in that** the determination module (9) is adapted to determine the rejection probability.

4. System according to any one of the preceding claims, **characterized in that** the original vector is or corresponds to biometric information, in particular of an admitted user.

5. System according to any one of the preceding claims, **characterized in that** the system (1) comprises:

   a storage module (5) to store the specific values as compressed information or password of the original vector, and/or
   an indicator module (11) to indicate, output or display that a claimed user is authenticated as original user if the test vector is accepted as being the original vector and that the claimed user is not authenticated as original user if the test vector is rejected as being the original vector.

6. System (1) according to any one of the preceding claims, **characterized in that** the system (1) is adapted to operate according to a method according to any one of the following claims.

7. Method of encoding a preferably digital or binary original vector and of verifying whether a preferably digital or binary test vector is considered as being the original vector even if the test vector is not identical with the original vector e.g. due to detection or transmission errors, the method comprising the following steps:

   splitting up the original vector in multiple fragments,
   generating a specific value for each fragment of the original vector based on a predetermined function,
   storing the specific values as compressed information or password of the original vector,
   splitting up the test vector in multiple fragments,
   generating a test value for each fragment of the test vector based on the function,
   determining an acceptance probability that the test values are the specific values in particular with errors, and
   verifying the test vector by indicating or outputting that the test vector is accepted as being the original vector if the acceptance probability is higher than or equal to: a) a threshold, and/or b) a rejection probability, that the test values relate to a random vector, or a function of the rejection probability.

8. Method according to claim 7, **characterized in that** the original vector belongs to a user and/or corresponds to biometric information of a user.

9. Method according to claim 7 or 8, **characterized in that** the values relating to the fragments of the original vector form a password of the user.

10. Method according to any one of claims 7 to 9, **characterized in that** the function is chosen such the original values do not allow reconstructing the original vector.

11. Method according to any one of claims 7 to 10, **characterized in that** the function is the weight, in particular the Hamming weight.

12. Method according to any one of claims 7 to 11, **characterized in that** the fragments have the same length.

13. Method according to any one of claims 7 to 12, **characterized in that** the vectors are cutted or transformed to predetermined length before the respective vector is split up in fragments.

14. Method according to any one of claims 7 to 13, **characterized in that** the test vector relates to a claimed user, wherein the claimed user is authenticated as original user if the test vector is verified as being the original vector and/or if the acceptance probability is higher than or equal to the threshold and/or rejection probability or a function thereof.

15. Method according to any one of claims 7 to 14, **characterized in that** the original vector is not stored.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **van Leeuwen.** Handbook of Theoretical Computer Science. Elsevier, 1990, vol. A